# EUROPEAN PATENT APPLICATION

(11) **EP 1 878 601 A1**
(43) Date of publication of application: **16.01.2008**
(21) Application number: 06117278.9
(22) Date of filing: 14.07.2006
(51) Int. Cl.: B60J 11/00

(54) **A vehicle protection device.**

(71) Applicant: Veamo, 1000 Brussel (BE)
(72) Inventor: Gees, Wilfried, 1000, BRUSSEL (BE)
(74) Representative: Quintelier, Claude

(57) **Abstract**

A vehicle protection device, comprising a canvas (6) provided to be stretched over said vehicle to be protected, in order to cover at least partially said vehicle, said canvas (6) being stored, when not in use, into a container (1) which comprises anchoring means (2) provided to fix said container (1) onto said vehicle.

## Description

The present invention relates to a vehicle protection device, comprising a canvas provided to be stretched over said vehicle to be protected, in order to cover at least partially said vehicle.

Such a vehicle protection device is well known and used to cover for example a car, a boat, a caravan or the like. With the known device, the canvas, which is generally folded up and stored in a loose bag, when not used, is removed from its bag, unfolded and spread over the vehicle to be protected. The canvas is then attached to the vehicle in order to avoid that it would be blown away by the wind.

A drawback of the known protection device is that the canvas is stored in a loose bag, when not used. In particular, when the canvas is wet, for example due to rain, the wet canvas will also make the bag wet and the place where he is stored. Moreover, since the bag is a loose one, the probability that the user either forgets or lose it is rather high.

The object of the invention is to realise a vehicle protection device offering more comfort in use.

A vehicle protection device according to the present invention is therefore characterised in that said canvas is stored, when not used, into a container, which comprises anchoring means provided to fix said container onto said vehicle. Since the canvas is stored into a container, which when in use, is fixed on the vehicle, the probability that the user will either forget or loose the canvas is substantially reduced. Moreover, even if the canvas is wet, the storage of the wet canvas into the container will not be a problem.

A first preferred embodiment of a vehicle protection device according to the invention is characterised in that said canvas is provided with spacing means, provided for leaving a space between said canvas and said vehicle, when said canvas is stretched over said vehicle. As the spacing means enable to create a space between the vehicle and the canvas, the air can circulate in that space, thereby avoiding that the canvas would stick to the body of the vehicle.

A second preferred embodiment of a vehicle protection device according to the invention is characterised in that said spacing means comprises a resilient member, built-in into said canvas. The resilient member offers a favourable solution for creating a space between the vehicle body and the canvas.

A third preferred embodiment of a vehicle protection device according to the invention is characterised in that anchoring means are provided to removable fix said container on said vehicle. In such a manner the device can be recuperated when the vehicle is sold.

A fourth preferred embodiment of a vehicle protection device according to the invention is characterised in that said anchoring means are provided to be applied into anchoring points, provided on said vehicle for anchoring a luggage rack. In such a manner, a rigid and reliable fixing of the device on the vehicle is realised.

A fifth preferred embodiment of a vehicle protection device according to the invention is characterised in that said anchoring means are formed by a clamp, provided to engage with a towing hook. This embodiment offers a practical solution when the vehicle is equipped with a towing hook.

A sixth preferred embodiment of a vehicle protection device according to the invention is characterised in that said canvas is mounted on a spring-loaded drum. The use of a spring-loaded drum enables an easy unfolding and rolling up of the canvas.

Preferably said canvas comprises an attachment member, mounted on a front end thereof and provided to attach said front end on said vehicle. In such a manner, the canvas can be attached to the vehicle when spread over the latter.

Preferably said canvas comprises a grid of micro-perforations. The grid of micro-perforations provides an air circulation while avoiding a water infiltration through the canvas.

The vehicle protection device according to the present invention will now be described in more detail with reference to the accompanying drawings showing preferred embodiments of the device.

In the drawings :
figure 1 shows a first embodiment of a vehicle protection device according to the invention with the canvas stored inside the container;
figure 2 shows the same first embodiment but with the canvas removed from the container;
figure 3 respectively 4 show a second embodiment of a vehicle protection device according to the invention with the canvas stored inside the container, respectively removed from the container;
figure 5 respectively 6 show the vehicle protection device with the canvas stretched over the vehicle while the device is attached to the back respectively the roof of the vehicle;
figure 7 shows a third embodiment of a vehicle protection device according to the invention;
figure 8 shows the vehicle protection device according to the invention attached to the towing hook of a vehicle; and
figure 9 shows the vehicle protection device according to the invention attached to the trunk of a vehicle.

In the drawings a same reference sign has been allocated to a same or analogous element.

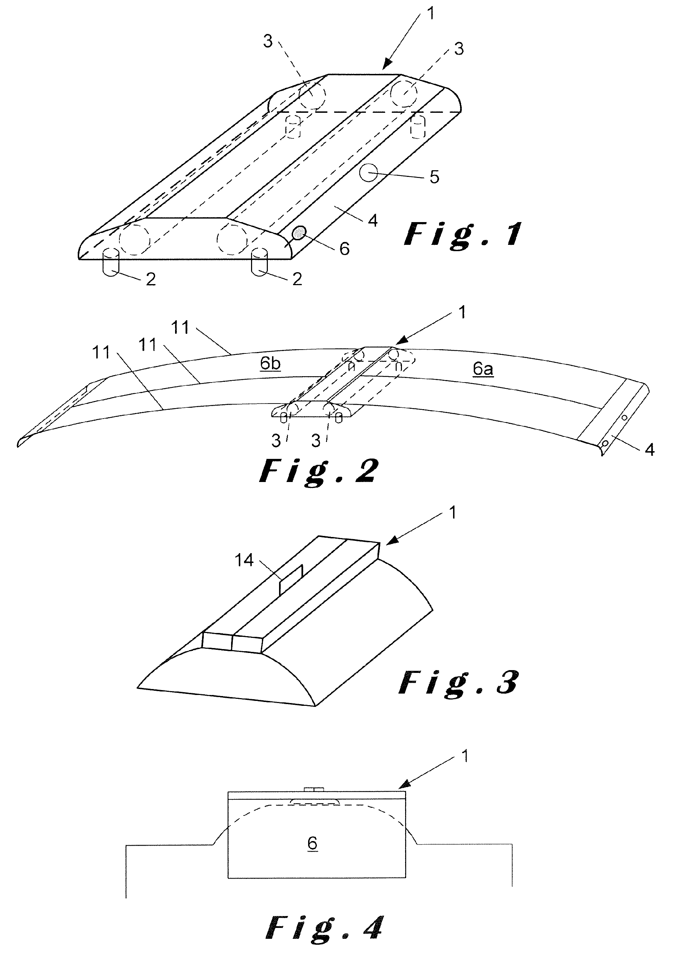

In the embodiment shown in figure 1, the vehicle protection device comprises a container 1, in which a canvas is stored. Preferably, the canvas is made of two sections, each wound up on a drum 3. When the canvas is not stretched over the vehicle, it is wound up on the drum. The drum is also stored inside the container, which is completely closed, in order to avoid that water, snow or dust would get inside it when mounted on a vehicle.

Although the drawings only show a car as vehicle, it should be noted that the present vehicle protection device can also be used on a boat, a truck, a caravan or any other vehicle.

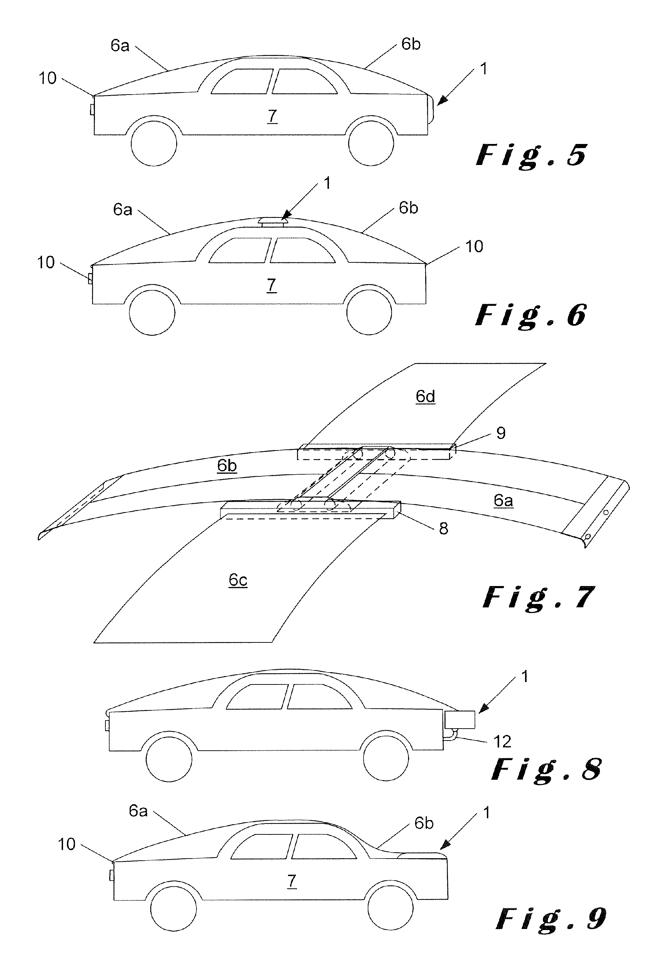

The container 1 is provided with anchoring means 2, provided to fix the container on the vehicle. In the embodiment shown in figure 1, the anchoring means are formed by hooks or clamps, which are provided to be applied into anchoring points, provided on the vehicle for anchoring a luggage rack. Alternatively, the anchoring means could be provided with clamps provided to fix the container on the luggage rack. Other alternatives for the anchoring means are suckers or magnetic poles. The suckers or magnetic poles are provided to be placed on the roof or any other body part of the vehicle where there is a flat surface. Although it is preferred that the anchoring means are provided to removably fix the container on the vehicle, it could also be possible to fix the container permanently on the vehicle. A removable fixing however has the advantage that the user can remove the container, for example, when he sells the vehicle or wants to store the device because it will not be used for a longer time. It could also be possible to integrate the device permanently into the vehicle, for example in the bumper. Alternatively, as illustrated in figure 9, the container could be removable or permanently fixed on the cover lid of the trunk. In the latter case the container is preferably clamped on this cover lid by means of clamps penetrating in the grooves between the cover lid and the remaining part of the vehicle body.

As is also illustrated in figure 1, the canvas comprises a front end 4 preferably made of a rigid material such as for example plastic. This front end is part of the cover of the container. A pulling member 5 is fixed on the front end 4 and serves to pull the canvas out of the box. It could also be possible to mount a lock 6 on the front end 4, in order to lock the container, thereby avoiding an unauthorised or unwanted use of the vehicle protection device.

As illustrated in the figures 1 and 2, the vehicle protection device according to the invention preferably comprises two canvasses, each applied on a drum 3. The drums extend substantially in parallel inside the container 1. The advantage of using two drums is that the canvas then comprises two sections 6a and 6b, as illustrated in figure 2. When the container is mounted on the roof of the vehicle 7, as illustrated in figure 6, the section 6a is stretched over the front half and section 6b over the rear half of the vehicle. In such a manner, the sections can be used separately.

In the embodiment illustrated in figure 7, the vehicle protection device according to the invention comprises four sections 6a, 6b, 6c en 6d, which enable, as if to say, to envelop the vehicle. In this latter embodiment, the container 1 comprises two lateral wings 8 and 9 for storing the sections 6c and 6d.

The canvas comprises preferably also an attachment member 10 mounted on a front end of the canvas and provided to attach the front end on the vehicle. As illustrated in the figures 5 and 6, once the canvas is stretched over the vehicle, the attachment member 10 serves to attach the front end of the canvas to the vehicle. In such a manner it is avoided that the wind would blow the canvas away or causes the canvas to move and hit the vehicle, thereby damaging it. The attachment member is for example formed by a magnet, a sucker or a hook.

As illustrated in figure 5 or 9, the container can be mounted on the trunk and the canvas is made of a single section. In order to enable a suitable carrying of the container by the user, the container is preferably provided with a handhold 14, as illustrated in figure 3.

The canvas is preferably made of a material comprising a grid of micro-perforations. In such a manner the air can circulate through the canvas whereas water can not penetrate. The canvas is preferably made of water impermeable material.

In order to maintain the canvas, when stretched over the vehicle, at a certain distance, for example between 0,5 and 1 cm, of the vehicle's body, spacing means are provided on the canvas. As illustrated in figure 2, the spacing means are formed by a resilient member 11 built-in into the canvas. The resilient member is for example formed by a set of elongated springs extending longitudinally in the canvas. In the example of figure 2, the canvas comprises elongated springs at its lateral sides and in the middle. Alternatively the spacing means could be formed by a frame onto which the canvas is mounted. The framed would then be folded up or opened when the canvas is rolled up respectively unrolled.

The figure 4 shows an embodiment of a vehicle protection device according to the present invention, where the canvas extends over the lateral sides of a car. In the latter embodiment the container is mounted on the vehicle's roof. In the embodiment shown in figure 8, the container is mounted on the towing hook 12 of the vehicle.

When the user wants to protect his vehicle with the device according to the invention, he will attach the container to the vehicle. Once attached, the canvas 6 is pulled out of the container by using the pulling member 5. The canvas can be pulled out by simply using the pulling member, which will cause the canvas 6 to unroll from the drum 3. Once the front end 4 has reached the last part to be covered, the canvas is attached by means of the attachment member 10. To roll up the canvas, the latter is first disconnected and then rolled up, thereby using the spring-loaded drums.

## Claims

1. A vehicle protection device, comprising a canvas provided to be stretched over said vehicle to be protected, in order to cover at least partially said vehicle, **characterised in that** said canvas is stored, when not in use, into a container, which comprises anchoring means provided to fix said container onto said vehicle.

2. The vehicle protection device as claimed in claim 1, **characterised in that** said canvas is provided with spacing means, provided for leaving a space between said canvas and said vehicle, when said canvas is stretched over said vehicle.

3. The vehicle protection device as claimed in claim 2, **characterised in that** said spacing means comprises a resilient member, built-in into said canvas.

4. The vehicle protection device as claimed in claim 2 or 3, **characterised in that** said spacing means comprises a frame onto which said canvas is mounted.

5. The vehicle protection device as claimed in any one of the claims 1 to 4, **characterised in that** said anchoring means are provided to removable fix said container on said vehicle.

6. The vehicle protection device as claimed in any one of the claims 1 to 5, **characterised in that** said anchoring means are provided to be applied into anchoring points, provided on said vehicle for anchoring a luggage rack.

7. The vehicle protection device as claimed in any one of the claims 1 to 5, **characterised in that** said anchoring means are provided to be applied on a luggage rack provided to be applied on said vehicle.

8. The vehicle protection device as claimed in any one of the claims 1 to 5, **characterised in that** said anchoring means are formed by suckers.

9. The vehicle protection device as claimed in any one of the claims 1 to 5, **characterised in that** said anchoring means are formed by magnetic poles.

10. The vehicle protection device as claimed in any one of the claims 1 to 5, **characterised in that** said anchoring means are formed by a clamp, provided to engage with a towing hook.

11. The vehicle protection device as claimed in any one of the claims 1 to 10, **characterised in that** said canvas is mounted on a spring-loaded drum.

12. The vehicle protection device as claimed in any one of the claims 1 to 11, **characterised in that** said canvas comprises an attachment member, mounted on a front end thereof and provided to attach said front end on said vehicle.

13. The vehicle protection device as claimed in any one of the claims 1 to 12, **characterised in that** said canvas comprises a grid of micro-perforations.

14. The vehicle protection device as claimed in any one of the claims 1 to 13, **characterised in that** said canvas is made of water impermeable material.

15. The vehicle protection device as claimed in any one of the claims 1 to 14, **characterised in that** said canvas is formed by a plurality of sections, each section being provided for covering a predetermined part of said vehicle.
